# EUROPÄISCHE PATENTSCHRIFT

(11) **EP 1 956 259 B1**
(45) Veröffentlichungstag und Bekanntmachung des Hinweises auf die Patenterteilung: **18.04.2012**
(21) Anmeldenummer: 08150828.5
(22) Anmeldetag: 30.01.2008
(51) Int. Cl.: F16D 41/10

(54) **Beidseitig wirkender Antrieb für eine Verstelleinrichtung in Kraftfahrzeugen**
Drive assembly which works in two directions for an adjusting device in motor vehicles
Entraînement agissant sur les deux côtés pour un dispositif de réglage dans des véhicules automobiles

(30) Priorität: 06.02.2007 DE 102007006730
(43) Veröffentlichungstag der Anmeldung: 13.08.2008
(73) Patentinhaber: Brose Fahrzeugteile GmbH & Co. KG, Coburg, 96450 Coburg (DE)
(72) Erfinder: Scheck, Georg, 96497 Weitramsdorf (DE)
(74) Vertreter: Ninnemann, Detlef

(56) Entgegenhaltungen:
- WO-A2-2004/094854
- DE-A1- 10 361 148
- DE-B3-102005 052 781
- FR-A1- 2 806 980
- US-A1- 2005 164 817

## Beschreibung

Die Erfindung betrifft einen beidseitig wirkenden Antrieb für eine Verstelleinrichtung in Kraftfahrzeugen gemäß dem Oberbegriff des Anspruchs 1.

### Stand der Technik

Aus der DE 103 61 148 A1 (oder z.B. WO 2004 094 854) ist eine Verstellvorrichtung zur Erzeugung einer beidseitigen Drehbewegung mit einem um eine Antriebsachse schwenkbaren Antriebselement, einem durch Betätigen des Antriebselements winkelverstellbaren Abtriebsrad mit einer hohlzylindrischen Anlagefläche und einer im Kraftfluss zwischen dem Antriebselement und dem Abtriebsrad angeordneten Kupplung bekannt, die eine Verstellbewegung des Antriebselements nur dann auf das Abtriebsrad überträgt, wenn das Antriebselement aus einer neutralen Ausgangsstellung in die eine oder andere Richtung bewegt wird. Die Kupplung enthält ein mit Vorspannung an der Anlagefläche des Abtriebsrads anliegendes Schlingfederband mit einem Umfang von weniger als 360° und Anlageflächen zur Kraftübertragung vom Antriebselement zum Abtriebsrad, einen mit dem Antriebselement und den Federenden des Schlingfederbandes wirkverbundenen Verstärkungshebel und zwei an der Antriebsachse angelenkte Übertragungshebel mit jeweils einem ersten Hebelarm, der jeweils einem vom Schlingfederband abgewinkelten Stützarm gegenübersteht, und mit einem zweiten Hebelarm, der an einem gehäusefesten Anschlag und an einem Verbindungsbolzen des Verstärkungshebels mit dem Antriebselement anliegt. Zwischen den Übertragungshebeln sind Rückstellfedern angeordnet, die zum Rückstellen des Schlingfederbandes in Abhängigkeit von der Richtung der Rückstellung jeweils einen ersten Hebelarm der Übertragungshebel gegen einen der Stützarme des Schlingfederbandes drücken, wobei zum Rückstellen des Antriebselements in Abhängigkeit von der Richtung der Rückstellbewegung jeweils ein zweiter Hebelarm gegen den mit dem Antriebselement verbundenen Verbindungsbolzen drückt.

### Aufgabenstellung, Lösung, Vorteile

Aufgabe der vorliegenden Erfindung ist es, einen beidseitig wirkenden Antrieb für eine Verstelleinrichtung in Kraftfahrzeugen der eingangs genannten Art zu schaffen, der aus wenigen Funktionsteilen besteht, einfach und mit geringem Platzbedarf aufgebaut, billig herzustellen, funktionssicher und langlebig ist und bei dem die Elemente der Rückstelleinrichtung in den Kraftfluss bei der Übertragung einer Antriebskraft vom Antriebselement zum Abtriebsrad integriert sind.

Diese Aufgabe wird erfindungsgemäß durch die Merkmale des Anspruchs 1 gelöst.

Durch den Einsatz eines einzelnen, bandförmigen Koppelelements, dessen Bandbereich mit einem Umfang von weniger als 360° an der rotationssymmetrischen Innenwand des Abtriebsrades anliegt und zwischen dessen Enden und Stützarmen der mit dem Antriebshebel verbundene Verstärkungshebel angeordnet ist sowie mindestens einer mit der Rückstelleinrichtung wirkverbundenen Koppelnase wird ein sehr einfach konstruierter und aus wenigen Funktionsteilen bestehender, billig herzustellender und wegen der wenigen Funktionsteile mit nur geringem Aufwand zu montierender, beidseitig wirkender Antrieb mit geringem Platzbedarf geschaffen, bei dem die Elemente zur Rückstellung der Funktionsteile des beidseitig wirkenden Antriebs in den Kraftfluss bei der Übertragung einer Antriebskraft vom Antriebselement zum Abtriebsrad integriert sind.

Trotz der einfachen und aus wenigen Funktionsteilen bestehenden Konstruktion des beidseitig wirkenden Antriebs gewährleistet der erfindungsgemäße Antrieb eine auch bei ungünstigen Verhältnissen und großen Antriebskräften sichere Kraftübertragung vom Antriebselement zum Abtriebsrad durch Aufweiten des bandförmigen Koppelelements und Mitführen des Abtriebsrades in Umfangsrichtung, wenn das Antriebselement aus einer neutralen Ausgangslage in die eine oder andere Richtung bewegt wird. Weiterhin gewährleistet die erfindungsgemäße Lösung durch die optimale Kraftübertragung mit einer breitflächigen Anlage des bandförmigen Koppelelements an der rotationssymmetrischen Innenwand des Abtriebsrades und durch die Verwendung eines flexiblen und dementsprechend langlebigen bandförmigen Koppelelements als Kupplung zwischen dem Antriebselement bzw. Verstärkungshebel und dem Abtriebsrad eine hohe Lebensdauer des beidseitig wirkenden Antriebs auch bei starken Belastungen.

Durch die Integration der Funktionselemente der Rückstelleinrichtung in den Kraftfluss zwischen dem Verstärkungshebel und dem Abtriebsrad wird der Zusammenbau des beidseitig wirkenden Antriebs vereinfacht, die Rückstellung der Funktionsteile des Antriebs in die neutrale Ausgangslage gewährleistet und es sind keine zusätzlichen Funktionsteile erforderlich, mit denen das bandförmige Koppelelement aufgeweitet wird, wenn der Verstärkungshebel durch entsprechendes Auslenken des Antriebselements aus der neutralen Ausgangslage in der einen oder anderen Richtung verstellt wird.

Das bandförmige Koppelelement mit integral angeformten Stützarmen und Koppelnasen gewährleistet, dass der Bandbereich des bandförmigen Koppelelements umso stärker mit der rotationssymmetrischen Innenwand des Abtriebsrades verspannt wird, je stärker der mit dem Antriebselement verbundene Verstärkungshebel gegen die Stützarme drückt, so dass ein Durchrutschen des bandförmigen Koppelelements mit zunehmender Antriebskraft wirksam verhindert wird. Dabei liegt der Bandbereich des bandförmigen Koppelelements mit oder ohne Eigenspannung an der rotationssymmetrischen Innenwand des Abtriebsrades an, wird beim Einleiten einer Antriebskraft bzw. eines Antriebsmoments aufgeweitet, stützt sich an den Stützarmen des bandförmigen Koppelelements ab und verspannt mit der rotationssymmetrischen Innenwand des Abtriebsrades zur schlupffreien Kraft- bzw. Drehmomentübertragung vom Antriebselement zum Abtriebsrad.

Die erfindungsgemäße Lösung kann auf unterschiedliche Weise durch verschiedene Ausführungsformen realisiert werden.

Eine erste Ausführungsform ist durch zwei symmetrisch zur Längssymmetrieebene des Antriebs angeordnete und voneinander beabstandete Koppelnasen, die mit den Seitenflanken einer Ausnehmung des Verstärkungshebels und gehäusefesten Anschlägen fluchten, und eine in der Ausgangslage des Antriebs an den Koppelnasen, den Seitenflanken der Ausnehmung des Verstärkungshebels und den gehäusefesten Anschlägen anliegende, als Druckfeder ausgebildete Rückstellfeder gekennzeichnet.

Diese besonders einfach gestaltete Ausführungsform der erfindungsgemäßen Lösung weist als Funktionsteile des beidseitig wirkenden Antriebs nur das mit seinem Bandbereich an der rotationssymmetrischen Innenwand des Abtriebsrades anliegende bandförmige Koppelelement, den mit dem Antriebselement verbundenen Verstärkungshebel und eine Rückstellfeder auf, die sowohl der Kraftübertragung beim Aufweiten des bandförmigen Koppelelements und damit bei der Übertragung der Antriebskraft vom Antriebselement zum Abtriebsrad als auch bei der Rückstellung der Funktionsteile des beidseitig wirkenden Antriebs nach einer Verstellbewegung dient. Diese vollständige Integration der Rückstellfeder in den Kraftübertragungsfluss des beidseitig wirkenden Antriebs wird durch die besondere Konfiguration des Verstärkungshebels und des bandförmigen Koppelelements ermöglicht, indem die Rückstellfeder in die Ausnehmung des Verstärkungshebels und zwischen den zu den Seitenflanken der Ausnehmung des Verstärkungshebels fluchtenden Koppelnasen des bandförmigen Koppelelements eingesetzt wird.

Vorzugsweise weist der Verstärkungshebel einen die Aussparung des Verstärkungshebels enthaltenden Zentralbereich auf, der mit parallel zueinander verlaufenden Außenflanken den Stützarmen des bandförmigen Koppelelements gegenübersteht, dessen eines Ende eine zwischen den Enden des Bandabschnitts des bandförmigen Koppelelements angeordnete Verstärkungshebelnase und dessen anderes Ende die Ausnehmung enthält.

Eine zweite Ausführungsform der erfindungsgemäßen Lösung ist dadurch gekennzeichnet, dass in der Ausgangslage des Antriebs die Koppelnase des bandförmigen Koppelelements, ein gehäusefester Anschlag und das Antriebselement am Verstärkungshebel in der vertikalen Symmetrieachse des Antriebs übereinander liegend angeordnet sind, dass erste Hebelarme von zwei scherenförmigen, an der Antriebsachse gelagerten Rückstellhebeln der Rückstelleinrichtung an der Koppelnase, dem gehäusefesten Anschlag und dem Antriebselement anliegen und dass zwischen den mit den ersten Hebelarmen verbundenen zweiten Hebelarmen der Rückstellhebel eine als Zugfeder ausgebildete Rückstellfeder angeordnet ist.

In dieser Ausführungsform ist nur eine Koppelnase erforderlich und durch die Verlagerung der als Zugfeder ausgebildeten Rückstellfeder auf die der Koppelnase in Bezug auf die durch die Antriebsachse gehende horizontale Symmetrieachse des beidseitig wirkenden Antriebs gegenüberliegende Seite wird eine optimale Ausnutzung des Innenraums des beidseitig wirkenden Antriebs ermöglicht.

Insbesondere bei dieser zweiten Ausführungsform wird das bandförmige Koppelelement unter Vorspannung in die rotationssymmetrische Innenwand des Abtriebsrades eingesetzt, so dass das bandförmige Koppelelement zur Optimierung der Übertragung eines Antriebsmoments vom Antriebselement zum Abtriebsrad über einen Umfang von angenähert 360° und aufgrund eines in Bezug auf die rotationssymmetrische Innenwand des Abtriebsrades größeren Durchmesser mit Vorspannung an der rotationssymmetrischen Innenwand des Abtriebsrades anliegt und damit eine maximale Anlagefläche des bandförmigen Koppelelements bei dessen durch die Bautiefe des beidseitig wirkenden Antriebs vorgegebener Breite mit hinreichender Anpresskraft gewährleistet ist.

Zur optimalen Abstützung des Verstärkungshebels beim Drehen oder Verschwenken des Antriebselements aus seiner Ausgangslage in die eine oder andere Richtung und damit zur optimalen Verspannung des bandförmigen Koppelelements mit der rotationssymmetrischen Innenwand des Abtriebsrades bei der Kraftübertragung vom Antriebselement zum Abtriebsrad stehen die radial in den Innenraum des Abtriebsrades ausgerichteten Stützarme in der Ausgangsstellung des Antriebs mit geringem Spiel den voneinander weggerichteten Außenflanken des Verstärkungshebels gegenüber, wobei die Verbindungslinie der radial in den Innenraum des Abtriebsrades gerichteten Stützarme gegenüber der Antriebsachse versetzt ist.

Als bandförmiges Koppelelement kann sowohl ein metallisches Schlingfederband als auch insbesondere ein Kunststoffband eingesetzt werden, wobei durch eine entsprechende Materialauswahl sowohl des Federbandes als auch der rotationssymmetrischen Innenwand des Abtriebsrades eine optimale Kraftübertragung beim Mitführen des Abtriebsrades und eine geringe Reibung beim Zurückführen des bandförmigen Koppelelements in die Nullpunkt- oder Ausgangslage gewährleistet ist.

Zur sicheren Übertragung der Abstütz- und Antriebskräfte vom Antriebselement zum Abtriebsrad weisen die Stützarme und Enden des bandförmigen Koppelelements eine größere Querschnittsfläche auf als der an der rotationssymmetrischen Innenwand des Abtriebsrades anliegende Bandbereich des bandförmigen Koppelelements.

Vorzugsweise wird der erfindungsgemäße beidseitig wirkende Antrieb für eine Lordosenstütze in einem Kraftfahrzeug eingesetzt, da sich der erfindungsgemäße Antrieb in besonderer Weise für geringer belastete Antriebe eignet.

### Ausführungsbeispiele

Anhand von zwei in der Zeichnung dargestellten Ausführungsbeispielen soll der der Erfindung zugrunde liegende Gedanke näher erläutert werden. Es zeigen:
- Fig. 1: einen schematischen Querschnitt durch einen beidseitig wirkenden Antrieb mit einer zwischen miteinander fluchtenden Anschlägen einer Ausnehmung eines Verstärkungshebels, zwei Koppelnasen des bandförmigen Koppelelements und zwei gehäusefesten Anschlägen angeordneten Rückstellfeder und
- Fig. 2: einen schematischen Querschnitt durch einen beidseitig wirkenden Antrieb mit einer Koppelnase und zwei scherenförmigen Rückstellhebeln.

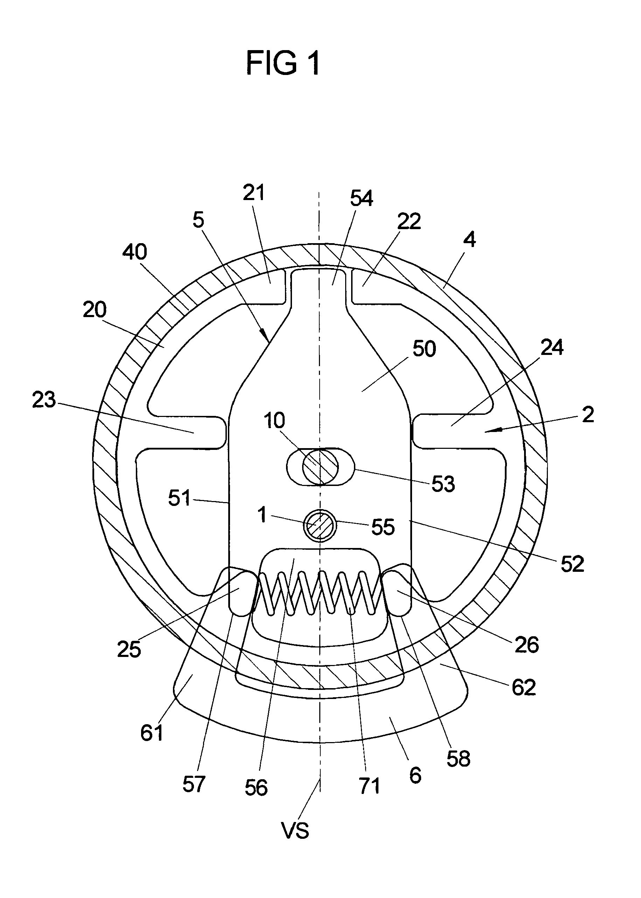

Fig. 1 zeigt einen schematischen Querschnitt durch einen beidseitig wirkenden Antrieb mit einem Antriebselement 1, das beispielsweise aus einem um eine Antriebsachse 10 schwenkbaren Antriebshebel besteht, der ausgehend von einer neutralen Ausgangslage in der einen oder anderen Richtung um die Antriebsachse 10 schwenkbar ist. Ein Abtriebsrad 4 mit rotationssymmetrischer, vorzugsweise zylinderförmiger Innenwand 40 ist mit einer Verstelleinrichtung eines Kraftfahrzeugs, beispielsweise mit einer Sitz-, Lehnen- oder Lordosenverstellung eines Kraftfahrzeugsitzes, verbunden und wird in Abhängigkeit von der Schwenkrichtung des Antriebselements ausgehend von dessen neutraler Ausgangslage in der einen oder anderen Drehrichtung verdreht und verstellt die mit dem Abtriebsrad 4 verbundene Verstelleinrichtung in der ein oder anderen Verstellrichtung.

Beispielsweise führt ein Verschwenken des Antriebselements im Uhrzeigersinn um die Antriebsachse 10 zu einer Drehung des Abtriebsrades 4 im Uhrzeigersinn und dementsprechend zu einem Anheben einer Lordosestütze bzw. ein Verschwenken des Antriebselements entgegen dem Uhrzeigersinn um die Antriebsachse 10 zu einer Drehung des Abtriebsrades 4 entgegen dem Uhrzeigersinn und dementsprechend zu einem Absenken der Lordosenstütze.

Zur Kraft- bzw. Drehmomentübertragung vom Antriebselement 1 zum Abtriebsrad 4 ist ein bandförmiges Koppelelement 2, vorzugsweise aus Kunststoff vorgesehen, dessen Bandbereich 20 über einen Umfang von weniger als 360° an der rotationssymmetrischen Innenwand 40 des Abtriebsrades 4 anliegt. Zwischen den voneinander beabstandeten und gegenüber dem Bandbereich 20 verdickten Enden 21, 22 des bandförmigen Koppelelements 2 ist eine Nase 54 eines Verstärkungshebels 5 mit geringem Spiel zu den Enden 21, 22 des bandförmigen Koppelelements 2 angeordnet. Der Verstärkungshebel 5 ist über eine quer zur vertikalen Symmetrieachse VS verlaufende Aussparung 53 an der Antriebsachse 10 abgestützt und über eine Bohrung 55 mit dem Antriebselement 1 verbunden. Die Mitte der Verstärkungshebelnase 54, die Aussparung 53 und die Bohrung 55 des Verstärkungshebels 5 zur Aufnahme des Antriebselements 1, in dieser Ausführungsform eines Nockens eines um die Antriebsachse schwenkbaren Antriebshebels, sind auf einer Linie angeordnet und befinden sich in der neutralen Ausgangslage des beidseitig wirkenden Antriebs in der durch die Antriebsachse 10 gehende vertikalen Symmetrieachse VS des beidseitig wirkenden Antriebs.

Ein Zentralbereich 50 des Verstärkungshebels 5 weist zwei parallel zueinander verlaufende Außenflanken 51, 52 auf, denen Stützarme 23, 24 des bandförmigen Koppelelements 2 mit ebenfalls geringem Spiel gegenüberstehen, die oberhalb der horizontalen Symmetrieachse vom Bandbereich 20 des bandförmigen Koppelelements 2 nach Innen und aufeinander zugerichtet abgewinkelt sind.

An dem der Verstärkungshebelnase 54 gegenüberliegenden Ende weist der Verstärkungshebel 5 eine Aussparung 56 auf, die durch zwei Seitenflanken 57, 58 begrenzt ist. In der neutralen Ausgangslage des beidseitig wirkenden Antriebs fluchten die Seitenflanken 57, 58 der Ausnehmung 56 des Verstärkungshebels 5 mit zwei von dem Bandbereich 20 des bandförmigen Koppelements 2 ebenfalls nach Innen abgewinkelten Koppelnasen 25, 26 und mit zwei gehäusefesten Anschlägen 61, 62 eines den beidseitig wirkenden Antrieb aufnehmenden Gehäuses 6. Zwischen den miteinander fluchteten Seitenflanken 57, 58 der Ausnehmung 56 des Verstärkungshebels 5, den Koppelnasen 25, 26 des bandförmigen Koppelelements 2 und den gehäusefesten Anschlägen 61, 62 ist eine als Druckfeder ausgebildete Rückstellfeder 71 einer Rückstelleinrichtung angeordnet, deren Enden mit an den in unterschiedlichen Ebenen angeordneten und miteinander fluchtenden Seitenflanken 57, 58, Koppelnasen 25, 26 und gehäusefesten Anschlägen 61, 62 anliegen.

Bei einem vom Antriebselement 1 im Uhrzeigersinn ausgeübten Antriebsmoment drückt das Antriebselement 1 ebenfalls im Uhrzeigersinn gegen die in Draufsicht linke Seitenflanke 57 der Ausnehmung 56 des Verstärkungshebels 5, der sich mit der gegenüberliegenden rechten Seitenflanke 58 an der vorgespannten Rückstellfeder 71 abstützt. Dadurch kippt der Verstärkungshebel 5 im Uhrzeigersinn ab und legt sich mit seiner linken Außenflanke 51 an den linken Stützarm 23 des bandförmigen Koppelelements 2 an. Wird das vom Antriebselements 1 ausgehende Antriebsmoment soweit vergrößert, dass die Vorspannung der Rückstellfeder 71 überwunden wird, so bewegt sich der mit dem Antriebselement 1 über die Bohrung 55 verbundene Verstärkungshebel 5 weiter nach links, so dass die Anlagekraft des Verstärkungshebels 5 an dem linken Stützarm 23 des bandförmigen Koppelelements 2 vergrößert wird, während sich die Verstärkungshebelnase 54 innerhalb der durch die Enden 21, 22 des bandförmigen Koppelements 2 gebildeten Aussparung nach rechts bewegt und sich an das rechts von der vertikalen Symmetrieachse VS liegende Ende 22 des bandförmigen Koppelements 2 anlegt.

In dieser ersten Phase der Krafteinleitung in den beidseitig wirkenden Antrieb verspannt das bandförmige Koppelelement 2 bedingt durch die Kraft der Rückstellfeder 71 mit der rotationssymmetrischen Innenwand 40 des Abtriebsrades 4 und leitet damit eine Übertragung des vom Antriebselement 1 ausgehenden Antriebsmoments zum Abtriebsrad 4 ein. Dadurch ist es möglich, das bandförmige Koppelelement 2 mit minimaler Vorspannung in das Abtriebsrad 4 einzusetzen.

Bei weiterer Drehung des Antriebselements 1 um die Antriebsachse 10 bewegen sich das Antriebselement 1, der Verstärkungshebel 5, das bandförmige Koppelelement 2 und das Abtriebsrad 4 synchron im Uhrzeigersinn um die Antriebsachse 10. Dabei wird die Rückstellfeder 71 durch die rechte Seitenflanke 58 der Ausnehmung 56 des Verstärkungshebels 5 zunehmend zusammengedrückt. Da der Verstärkungshebel 5 ein geringes Funktionsspiel zu den Enden 21, 22 und Stützarmen 23, 24 des bandförmigen Koppelelements 2 aufweist, eilt die linke Seitenflanke 57 der linken Koppelnase 25 des bandförmigen Koppelelements 2 voraus, so dass der Verstärkungshebels 5 gegenüber dem bandförmigen Koppelelement 2 während der Verstellbewegung etwas verdreht ist.

Da bei der Drehung des mit dem Antriebselement 1 verbundenen Verstärkungshebels 5 und des bandförmigen Koppelelements 2 im Uhrzeigersinn um die Antriebsachse 10 das linke Ende der Rückstellfeder 71 unverändert an dem linken gehäusefesten Anschlag 61 anliegt, wird die Rückstellfeder 71 während der vom Antriebselement 1 zum Abtriebsrad 4 übertragenen Verstellbewegung gespannt.

Beim Zurückbewegen des Antriebselements 1 in die neutrale Ausgangslage bewegt sich das Antriebselement 1 bzw. der in die Bohrung 55 des Verstärkungshebels 5 eingreifende Nocken bedingt durch die von der Rückstellfeder 71 auf den Verstärkungshebel 5 ausgeübte Rückstellkraft etwas nach rechts in Bezug auf die vertikale Symmetrieachse VS. Dabei wird auch das die Aussparung 56 enthaltende Ende des Verstärkungshebels 5 in die neutrale Ausgangslage zurückbewegt, wodurch der Verstärkungshebel 5 um die linke Koppelnase 25 des bandförmigen Koppelelements 2 nach links kippt.

Das bandförmige Koppelement 2 bleibt in dieser Phase der Rückstellbewegung wegen der Reibung zwischen dem Bandbereich 20 des bandförmigen Koppelements 2 und der rotationssymmetrischen Innenwand 40 des Abtriebsrades 4 in Ruhestellung. Nach einem kurzen Weg hat sich die rechte Seitenflanke 58 der Aussparung 56 des Verstärkungshebels 5 soweit nach rechts bewegt bis das rechte Ende der Rückstellfeder 71 gleichzeitig an der rechten Seitenflanke 58 des Verstärkungshebels 5 und der rechten Koppelnase 26 des bandförmigen Koppelelements 2 anlegt und der Verstärkungshebel 5 das bandförmige Koppelement 2 nur noch an der linken Koppelnase 25 berührt.

Bei weiterer Rückstellbewegung des Antriebselements 1 drückt die Rückstellfeder 71 den Verstärkungshebel 5, das Antriebselement 1 und das bandförmige Koppelelement 2 wieder zurück in die neutrale Ausgangslage, wobei sich der Bandbereich 20 des bandförmigen Koppelelements 2 mit einem nur kleinen Reibmoment innerhalb der rotationssymmetrischen Innenwand 40 des Abtriebsrades 4 dreht.

Bei einer Drehung des Antriebshebels entgegen dem Uhrzeigersinn laufen die vorstehend beschriebenen Bewegungsphasen in entgegen gesetzter Richtung und an den spiegelbildlich zur vertikalen Symmetrieachse VS angeordneten Bereichen der Funktionsteile des beidseitig wirkenden Antriebs ab.

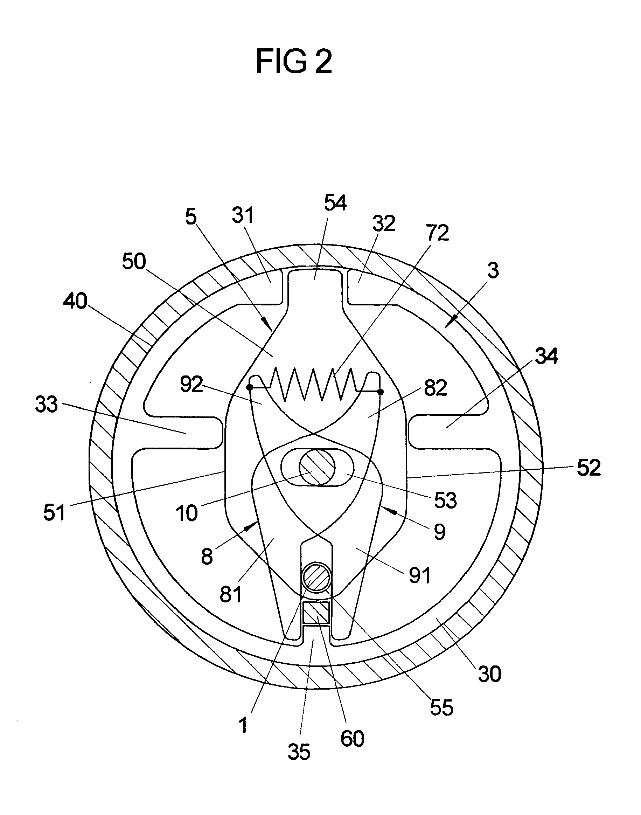

Die in Fig. 2 in einem schematischen Querschnitt dargestellte zweite Ausführungsform weist in Übereinstimmung mit dem in Fig. 1 dargestellten Ausführungsbeispiel ein Antriebselement 1 auf, das ebenfalls aus einem um eine Antriebsachse 10 schwenkbaren Antriebshebel bestehen kann, der ausgehend von einer neutralen Ausgangslage in der ein oder anderen Richtung um die Antriebsachse 10 schwenkbar ist. Ein Abtriebsrad 4 mit rotationssymmetrischer, vorzugsweise zylinderförmiger Innenwand 40 ist mit der Verstelleinrichtung eines Kraftfahrzeugs verbunden und wird in Abhängigkeit von der Schwenkrichtung des Antriebselements ausgehend von dessen neutraler Ausgangslage in der einen oder anderen Drehrichtung verdreht und verstellt die mit dem Abtriebsrad 4 verbundene Verstelleinrichtung in der ein oder anderen Verstellrichtung.

Zur Kraft- bzw. Drehmomentübertragung vom Antriebselement 1 zum Abtriebsrad 4 ist ein bandförmiges Koppelelement 3 vorgesehen, dessen Bandbereich 30 über einen Umfang von weniger als 360° an der rotationssymmetrischen Innenwand 40 des Abtriebsrades 4 anliegt. Zwischen den voneinander beabstandeten und gegenüber dem Bandbereich 30 verdickten Enden 31, 32 des bandförmigen Koppelelements 3 ist eine Nase 54 eines Verstärkungshebels 5 mit geringem Spiel zu den Enden 31, 32 des bandförmigen Koppelelements 3 angeordnet. Der Verstärkungshebel 5 ist über eine quer zur vertikalen Symmetrieachse VS verlaufende Aussparung 53 an der Antriebsachse 10 abgestützt und über eine Bohrung 55 mit dem Antriebselement 1 verbunden. Die Mitte der Verstärkungshebelnase 54, die Aussparung 53 und die Bohrung 55 des Verstärkungshebels 5 zur Aufnahme des Antriebselements 1 sind auf einer Linie angeordnet und befinden sich in der neutralen Ausgangslage des beidseitig wirkenden Antriebs in der durch die Antriebsachse 10 gehende vertikalen Symmetrieachse VS des beidseitig wirkenden Antriebs.

Ein Zentralbereich 50 des Verstärkungshebels 5 weist zwei parallel zueinander verlaufende Außenflanken 51, 52 auf, denen Stützarme 33, 34 des bandförmigen Koppelelements 3 mit ebenfalls geringem Spiel gegenüberstehen, die oberhalb der horizontalen Symmetrieachse vom Bandbereich 20 des bandförmigen Koppelelements 2 nach Innen und aufeinander zugerichtet abgewinkelt sind.

Im Unterschied zu dem in Fig. 1 dargestellte Ausführungsbeispiel weist das bandförmige Koppelelement 3 nur eine, in der neutralen Ausgangslage des beidseitig wirkenden Antriebs mit der vertikalen Symmetrieachse VS fluchtende Koppelnase 35 auf, die zusammen mit einem gehäusefesten Nocken 60, dem Antriebselement 1 bzw. der Bohrung 55 des Verstärkungshebels 5 und der Antriebsachse 10 sowie der Mitte der Nase 54 des Verstärkungshebels 5 auf der vertikalen Symmetrieachse VS liegt.

Zwei scherenförmig miteinander verbundene und an der Antriebsachse 10 gelagerte Rückstellhebel 8, 9 liegen mit ersten Hebelarmen 81, 91 an der Koppelnase 35 des bandförmigen Koppelelements 3, am gehäusefesten Anschlag 60 und am Antriebselement 1 an. Zwischen zweiten Hebelarmen 82, 92 der scherenförmigen Rückstellhebel 8, 9, die bezüglich der Antriebsachse 10 über Kreuz mit den ersten Hebelarmen 81, 91 verbundenen sind, ist eine als Zugfeder ausgebildete Rückstellfeder 72 angeordnet, die die ersten Hebelarme 81, 91 gegen das Antriebselement 1, die Koppelnase 35 und den gehäusefesten Anschlag 60 drücken.

Wird mittels des Antriebselements 1 ein Antriebsmoment im Uhrzeigersinn in den beidseitig wirkenden Antrieb eingeleitet, so wird der Verstärkungshebel 5 an seinem der Verstärkungshebelnase 54 entgegen gesetzten Ende etwas nach links von der vertikalen Symmetrieachse VS ausgelenkt bis das geringe Funktionsspiel des Verstärkungshebel 5 gegenüber dem bandförmigen Koppelelement 3 überbrückt ist, so dass die linke Außenflanke 51 des Verstärkungshebels 5 am linken Stützarm 33 und die Verstärkungshebelnase 54 am rechten Ende 32 des bandförmigen Koppelelements 3 anliegt. Dadurch wird das bandförmige Koppelelement 3 aufgeweitet, so dass sich der Bandbereich 30 des bandförmigen Koppelelements 3 mit der rotationssymmetrischen Innenwand 40 des Abtriebsrades 4 verspannt.

Bei fortwirkendem Antriebsmoment werden das bandförmige Koppelelement 3 und das Abtriebsrad 4 im Uhrzeigersinn vom Verstärkungshebel 5 mitgenommen, wobei gleichzeitig die Hebelarme 81, 82 des ersten Rückstellhebels 8 im Uhrzeigersinn um die Antriebsachse 10 gedreht werden, so dass die Rückstellfeder 72 gedehnt wird. Dagegen verharrt der zweite Rückstellhebel 9 in seiner Ausgangsstellung, da der erste Hebelarm 91 des zweiten Rückstellhebels 9 an dem gehäusefesten Anschlag 60 hängen bleibt. Während der Drehung des Verstärkungshebels 5 und des mit dem bandförmigen Koppelelement 3 verspannten Abtriebsrades 4 im Uhrzeigersinn um die Antriebsachse 10 eilt der erste Hebelarm 81 des ersten Rückstellhebels 8 ständig der Koppelnase 35 des bandförmigen Koppelelements 3 voraus.

Wird das im Uhrzeigersinn wirkende Antriebsmoment aufgehoben bzw. reduziert, so zieht die gedehnte Rückstellfeder 72 den ersten Rückstellhebel 8 in seine Ausgangslage zurück, wobei das Antriebselement 1 geringfügig nach rechts in Richtung auf die vertikale Symmetrieachse VS bewegt wird, bis sich der erste Rückstellhebel 8 in der Mittelstellung des Verstärkungshebels 5 an die Koppelnase 35 des bandförmigen Koppelelements 3 anlegt. Von dort werden das leicht vorgespannte bandförmige Koppelelement 3 und der Verstärkungshebel 5 innerhalb der rotationssymmetrischen Innenwand 40 des Abtriebsrades 4 mit wenig Reibung in die neutrale Ausgangslage zurückgedreht.

### Bezugszeichenliste

- 1: Antriebselement
- 2, 3: bandförmiges Koppelelement
- 4: Abtriebsrad
- 5: Verstärkungshebel
- 6: Gehäuse
- 8, 9: Rückstellhebel
- 10: Antriebsachse
- 20: Bandbereich des bandförmigen Koppelelements 2
- 21, 22: Enden des bandförmigen Koppelelements 2
- 23, 24: Stützarme
- 25, 26: Koppelnasen
- 30: Bandbereich des bandförmigen Koppelelements 3
- 31, 32: Enden des bandförmigen Koppelelements 3
- 33,34: Stützarme
- 35: Koppelnase
- 40: rotationssymmetrische Innenwand
- 50: Zentralbereich
- 51,52: Außenflanken
- 53: Aussparung
- 54: Verstärkungshebelnase
- 55: Bohrung
- 56: Aussparung
- 57, 58: Seitenflanken der Aussparung
- 60: Gehäusefester Anschlag
- 61, 62: Gehäusefeste Anschläge
- 71, 72: Rückstellfeder
- 81,91: Erste Hebelarme
- 82, 92: Zweite Hebelarme
- VS: vertikale Symmetrieachse

## Patentansprüche

1. Beidseitig wirkender Antrieb mit einem winkelverstellbaren Antriebsrad für eine Verstelleinrichtung in einem Kraftfahrzeug, die mit dem winkelverstellbaren Abtriebsrad (4) wirkverbindbar ist, das um eine Antriebsachse (10) drehbar ist und eine rotationssymmetrische Innenwand aufweist, an der ein Bandbereich eines bandförmigen Koppelelements (2) mit einem Umfang von weniger als 360° anliegt, von dem symmetrisch zur vertikalen Symmetrieachse des Antriebs und zueinander ausgerichtete Stützarme (23, 24) abgewinkelt sind, zwischen denen und den Enden des Bandbereichs (20, 30) des bandförmigen Koppelelements ein Verstärkungshebel mit Spiel zu den Enden des Bandbereichs und den Stützarmen des bandförmigen Koppelelements angeordnet ist, der über eine quer zur vertikalen Symmetrieachse verlaufende Aussparung an der Antriebsachse (10) abgestützt und mit einem Antriebselement (1) derart verbunden ist, dass der Verstärkungshebel (5) durch Anlage an einem Ende des Bandabschnitts und an einem Stützarm (23, 24) des bandförmigen Koppelelements den Bandbereich des bandförmigen Koppelelements mit der Innenwand (40) des Abtriebsrades verspannt und das Abtriebsrad in Umfangsrichtung mitführt, wenn das Antriebselement aus einer Ausgangslage in der einen oder anderen Richtung bewegt wird und mit einer das bandförmige Koppelelement, den Verstärkungshebel (5) und das Antriebselement (1) in die Ausgangslage rückführenden Rückstelleinrichtung mit einer Rückstellfeder,
**dadurch gekennzeichnet,**
**dass** mindestens eine Koppelnase (25, 26; 35) vom Bandbereich (20, 30) des bandförmigen Koppelelements (2, 3) zur Antriebsachse (10) gerichtet und zumindest in der Ausgangslage des Antriebs und bei der Rückführung des bandförmigen Koppelelements (2, 3), des Verstärkungshebels (5) und des Antriebselements (1) in die Ausgangslage mit der Rückstelleinrichtung (71, 72) verbunden ist.

2. Antrieb nach Anspruch 1, **gekennzeichnet durch** zwei symmetrisch zur vertikalen Symmetrieachse (VS) des Antriebs angeordnete und voneinander beabstandete Koppelnasen (25, 26), die mit den Seitenflanken (57, 58) einer Ausnehmung (56) des Verstärkungshebels (5) und gehäusefesten Anschlägen (61, 62) fluchten, und eine in der Ausgangslage des Antriebs an den Koppelnasen (25, 26), den Seitenflanken (57, 58) der Ausnehmung (56) des Verstärkungshebels (5) und den gehäusefesten Anschlägen (61, 62) anliegende, als Druckfeder ausgebildete Rückstellfeder (71).

3. Antrieb nach Anspruch 2, **dadurch gekennzeichnet, dass** der Verstärkungshebel (5) einen die Aussparung (56) des Verstärkungshebels (5) enthaltenden Zentralbereich (50) aufweist, der mit parallel zueinander verlaufenden Außenflanken (51, 52) den Stützarmen (23, 24) des bandförmigen Koppelelements (2) gegenübersteht, dessen eines Ende eine zwischen den Enden (21, 22) des Bandabschnitts (20) des bandförmigen Koppelelements (2) angeordnete Verstärkungshebelnase (54) und dessen anderes Ende die Ausnehmung (56) aufweist.

4. Antrieb nach Anspruch 1, **dadurch gekennzeichnet, dass** in der Ausgangslage des Antriebs die Koppelnase (35) des bandförmigen Koppelelements (3), ein gehäusefester Anschlag (60) und das Antriebselement (1) am Verstärkungshebel (5) in der vertikalen Symmetrieachse (VS) des Antriebs übereinander liegend angeordnet sind, dass erste Hebelarme (81, 91) von zwei scherenförmigen, an der Antriebsachse (10) gelagerten Rückstellhebeln (8, 9) der Rückstelleinrichtung an der Koppelnase (35), dem gehäusefesten Anschlag (60) und dem Antriebselement (1) anliegen und dass zwischen den mit den ersten Hebelarmen (81, 91) verbundenen zweiten Hebelarmen (82, 92) der Rückstellhebel (8, 9) eine als Zugfeder ausgebildete Rückstellfeder (72) angeordnet ist.

5. Antrieb nach mindestens einem der vorangehenden Ansprüche, **dadurch gekennzeichnet, dass** das bandförmige Koppelelement (2, 3) unter Vorspannung in die rotationssymmetrische Innenwand (40) des Abtriebsrades (4) eingesetzt ist.

6. Antrieb nach mindestens einem der vorangehenden Ansprüche, **dadurch gekennzeichnet, dass** die Stützarme (23, 24; 33, 34) in der Ausgangsstellung des Antriebs mit geringem Spiel den voneinander weggerichteten Außenflanken (51, 52) des Verstärkungshebels (5) gegenüberstehen.

7. Antrieb nach mindestens einem der vorangehenden Ansprüche, **dadurch gekennzeichnet, dass** die Stützarme (23, 24; 33, 34) radial in den Innenraum des Abtriebsrades (4) gerichtet sind.

8. Antrieb nach Anspruch 7, **dadurch gekennzeichnet, dass** die Verbindungslinie der radial in den Innenraum des Abtriebsrades (4) gerichteten Stützarme (23, 24; 33, 34) gegenüber der Antriebsachse (10) versetzt ist.

9. Antrieb nach mindestens einem der vorangehenden Ansprüche, **dadurch gekennzeichnet, dass** die Stützarme (23, 24; 33, 34 und Enden (21, 22; 31, 32) des bandförmigen Koppelelements (2, 3) eine größere Querschnittsfläche aufweisen als der an der rotationssymmetrischen Innenwand (40) des Abtriebsrades (4) anliegende Bandbereich (20, 30) des bandförmigen Koppelelements (2, 3).

10. Antrieb nach mindestens einem der vorangehenden Ansprüche, **dadurch gekennzeichnet, dass** das bandförmige Koppelelement (2, 3) aus Kunststoff besteht.

11. Antrieb nach mindestens einem der vorangehenden Ansprüche 1 bis 9, **dadurch gekennzeichnet, dass** das bandförmige Koppelelement (2, 3) aus einem Metall, vorzugsweise aus einem Federstahl, besteht.

12. Verwendung des beidseitig wirkenden Antriebs nach mindestens einem der vorangehenden Ansprüche für eine Lordosenstütze eines Kraftfahrzeugsitzes.

## Claims

1. A drive acting in both directions with an angularly adjustable drive wheel for an adjusting means in a motor vehicle, which is operatively connectable with the angularly adjustable driven wheel (4) which is rotatable about a drive axle (10) and has a rotationally symmetrical inner wall, against which a belt region of a belt-shaped coupling element (2) rests with a circumference of less than 360°, from which support arms (23, 24) are angled symmetrically relative to the vertical axis of symmetry of the drive and aligned relative to each other, between which and the ends of the belt region (20, 30) of the belt-shaped coupling element a reinforcing lever is arranged with a clearance to the ends of the belt region and the support arms of the belt-shaped coupling element, which is supported on the drive axle (10) via a recess extending transverse to the vertical axis of symmetry and is connected with a drive element (1) such that by resting against an end of the belt portion and against a support arm (23, 24) of the belt-shaped coupling element the reinforcing lever (5) braces the belt region of the belt-shaped coupling element with the inner wall (40) of the driven wheel and carries along the driven wheel in circumferential direction, when the drive element is moved from a starting position in the one or other direction, and with a return means with a return spring guiding the belt-shaped coupling element, the reinforcing lever (5) and the drive element (1) back into the starting position,
**characterized in**
**that** at least one coupling nose (25, 26; 35) is directed from the belt region (20, 30) of the belt-shaped coupling element (2, 3) to the drive axle (10) and at least in the starting position of the drive and when returning the belt-shaped coupling element (2, 3), the reinforcing lever (5) and the drive element (1) into the starting position is connected with the return means (71, 72).

2. The drive according to claim 1, **characterized by** two coupling noses (25, 26) arranged symmetrically with respect to the vertical axis of symmetry (VS) of the drive and spaced from each other, which are aligned with the side flanks (57, 58) of a recess (56) of the reinforcing lever (5) and with stops (61, 62) firmly mounted on the housing, and by a return spring (71) constituting a compression spring, which in the starting position of the drive rests against the coupling noses (25, 26), the side flanks (57, 58) of the recess (56) of the reinforcing lever (5) and the stops (61, 62) firmly mounted on the housing.

3. The drive according to claim 2, **characterized in that** the reinforcing lever (5) includes a central region (50) containing the recess (56) of the reinforcing lever (5), which with outer flanks (51, 52) extending parallel to each other is located opposite the support arms (23, 24) of the belt-shaped coupling element (2), whose one end includes a reinforcing lever nose arranged between the ends (21, 22) of the belt portion (20) of the belt-shaped coupling element (2) and whose other end includes the recess (56).

4. The drive according to claim 1, **characterized in that** in the starting position of the drive the coupling nose (35) of the belt-shaped coupling element (3), a stop (60) firmly mounted on the housing and the drive element (1) are arranged on the reinforcing lever (5) to lie one above the other in the vertical axis of symmetry (VS) of the drive, that first lever arms (81, 91) of two scissor-like return levers (8, 9) of the return means mounted on the drive axle (10) rest against the coupling nose (35), the stop (60) firmly mounted on the housing and the drive element (1), and that between the second lever arms (82, 92) of the return levers (8, 9) connected with the first lever arms (81, 91) a return spring (72) constituting a tension spring is arranged.

5. The drive according to at least one of the preceding claims, **characterized in that** the belt-shaped coupling element (2, 3) is inserted with a bias into the rotationally symmetrical inner wall (40) of the driven wheel (4).

6. The drive according to at least one of the preceding claims, **characterized in that** in the starting position of the drive the support arms (23, 24; 33, 34) are located opposite the outer flanks (51, 52) of the reinforcing lever (5) directed away from each other with little clearance.

7. The drive according to at least one of the preceding claims, **characterized in that** the support arms (23, 24; 33, 34) are directed radially into the interior of the driven wheel (4).

8. The drive according to claim 7, **characterized in that** the connecting line of the support arms (23, 24; 33, 34) directed radially into the interior of the driven wheel (4) is offset with respect to the drive axle (10).

9. The drive according to at least one of the preceding claims, **characterized in that** the support arms (23, 24; 33, 34) and ends (21, 22; 31, 32) of the belt-shaped coupling element (2, 3) have a larger cross-sectional area than the belt region (20, 30) of the belt-shaped coupling element (2, 3) resting against the rotationally symmetrical inner wall (40) of the driven wheel (4).

10. The drive according to at least one of the preceding claims, **characterized in that** the belt-shaped coupling element (2, 3) is made of plastics.

11. The drive according to at least one of the preceding claims 1 to 9, **characterized in that** the belt-shaped coupling element (2, 3) is made of a metal, preferably of a spring steel.

12. Use of the drive acting in both directions according to at least one of the preceding claims for a lordosis support of a motor vehicle seat.

## Revendications

1. Entraînement agissant dans les deux sens comprenant une roue d'entraînement réglable de manière angulaire pour un dispositif de réglage dans un véhicule automobile, lequel est susceptible d'être relié de manière active avec une roue d'entraînement (4) réglable de manière angulaire, laquelle est capable de rotation autour d'un axe d'entraînement (10) et présente une paroi intérieure à symétrie de révolution, contre laquelle s'applique une zone en bande d'un élément de couplage (2) en forme de bande avec une périphérie inférieure à 360°, depuis lequel des bras de soutien (23, 24) sont coudés, symétriquement par rapport à l'axe de symétrie vertical de l'entraînement et alignés l'un par rapport à l'autre, de sorte qu'entre ces bras de soutien et les extrémités de la zone en bande (20, 30) de l'élément de couplage en forme de bande est agencé un levier amplificateur avec jeu vis-à-vis des extrémités de la zone en bande et vis-à-vis des bras de soutien de l'élément de couplage en forme de bande, levier qui est soutenu sur l'axe d'entraînement (10) via un évidemment qui s'étend perpendiculairement à l'axe de symétrie vertical et qui est relié à un élément d'entraînement (1) de telle manière que le levier amplificateur (5), par venue en appui sur une extrémité de la zone en bande et sur un bras de soutien (23, 24) de l'élément de couplage en forme de bande, précontraint la zone en bande de l'élément de couplage en forme de bande avec la paroi intérieure (40) de la roue entraînée et entraîne la roue entraînée en direction périphérique quand l'élément d'entraînement est déplacé depuis une position de départ dans une direction ou dans l'autre, et comprenant un dispositif de rappel, avec un ressort de rappel, qui ramène l'élément de couplage en forme de bande, le levier amplificateur (5) et l'élément d'entraînement (1) jusque dans la position de départ,
**caractérisé en ce que**
au moins un ergot de couplage (25, 26 ; 35) est orienté depuis la zone en bande (20, 30) de l'élément de couplage (2, 3) en forme de bande vers l'axe d'entraînement (10) et, au moins dans la position de départ de l'entraînement et lors du rappel de l'élément de couplage (3, 2) en forme de bande, du levier amplificateur (5) et de l'élément d'entraînement (1) jusque dans la position de départ, est relié au dispositif de rappel (71,72).

2. Entraînement selon la revendication 1, **caractérisé par** deux ergots de couplage (25, 26) agencés symétriquement par rapport à l'axe de symétrie vertical (VS) de l'entraînement et à distance l'un de l'autre, qui sont alignés avec les flancs latéraux (57, 58) d'un évidement (56) du levier amplificateur (5) et avec des butées (61, 62) solidaires du boîtier, et par un ressort de rappel (71), réalisé sous forme de ressort de compression, appliqué, dans la position de départ de l'entraînement, contre les ergots de couplage (25, 26), les flancs latéraux (57, 58) de l'évidement (56) du levier amplificateur (5), et les butées (61, 62) solidaires du boîtier.

3. Entraînement selon la revendication 2, **caractérisé en ce que** le levier amplificateur (5) comprend une zone centrale (50) qui contient l'évidement (56) du levier amplificateur (5) lequel est opposé, au moyen de flancs extérieurs (51, 52) s'étendant parallèlement l'un à l'autre, aux bras de soutien (23, 24) de l'élément de couplage en forme de bande (2), dont une extrémité comprend un ergot de levier amplificateur (54), agencé entre les extrémités (21, 22) du tronçon en bande (20) de l'élément de couplage en forme de bande (2), et dont l'autre extrémité comporte l'évidement (56).

4. Entraînement selon la revendication 1, **caractérisé en ce que**, dans la position de départ de l'entraînement, l'ergot de couplage (35) de l'élément de couplage en forme de bande (3), une butée (60) solidaire du boîtier, et l'élément d'entraînement (1) sur le levier amplificateur (5) sont agencés disposés l'un au-dessus de l'autre dans le plan de symétrie vertical (VS) de l'entraînement, **en ce que** des premiers bras de levier (81, 91) de deux leviers de rappel (8, 9), du dispositif de rappel, en forme de ciseaux et montés sur l'axe d'entraînement (10), sont appliqués contre l'ergot de couplage (35), la butée (60) solidaire du boîtier, et l'élément d'entraînement (1), et **en ce qu'**un ressort de rappel (72), réalisé sous forme de ressort de traction, est agencé entre les seconds bras de levier (82, 92), reliés au premier bras de levier (81, 91), du ressort de rappel (8, 9).

5. Entraînement selon l'une au moins des revendications précédentes, **caractérisé en ce que** l'élément de couplage (2, 3) en forme de bande est mis en place sous précontrainte dans la paroi intérieure (40) à symétrie de révolution de la roue d'entrainement (4).

6. Entraînement selon l'une au moins des revendications précédentes, **caractérisé en ce que** les bras de soutien (23, 24 ; 33, 34) sont opposés, dans la position de départ de l'entraînement, avec faible le jeu, vis-à-vis des flancs extérieurs (51, 52) orientés en éloignement l'un de l'autre, du levier amplificateur (5).

7. Entraînement selon l'une au moins des revendications précédentes, **caractérisé en ce que** les bras de soutien (23, 24 ; 33, 34) sont orientés radialement vers l'espace intérieur de la roue entraînée (4).

8. Entraînement selon la revendication 7, **caractérisé en ce que** la ligne de liaison des bras de soutien (23, 24 ; 33, 34) orientés radialement vers l'espace intérieur de la roue entraînée (4) est décalée par rapport à l'axe d'entraînement (10).

9. Entraînement selon l'une au moins des revendications précédentes, **caractérisé en ce que** les bras de soutien (23, 24 ; 33, 34) et les extrémités (21, 22 ; 31, 32) de l'élément de couplage (2, 3) en forme de bande présentent une surface de section transversale plus grande que la zone en bande (20, 30), de l'élément de couplage en forme de bande (2, 3), appliquée contre la paroi intérieure (40) à symétrie de révolution de la roue entraînée (4).

10. Entraînement selon l'une au moins des revendications précédentes, **caractérisé en ce que** l'élément de couplage (2, 3) en forme de bande est en matière plastique.

11. Entraînement selon l'une au moins des revendications précédentes 1 à 9, **caractérisé en ce que** l'élément de couplage (2, 3) en forme de bande est en métal, de préférence en acier à ressort.

12. Utilisation de l'entraînement agissant dans les deux sens, selon l'une au moins des revendications précédentes, pour un soutien lombaire d'un siège de véhicule automobile.
